# EUROPEAN PATENT SPECIFICATION

(11) **EP 4 280 060 B1**
(45) Date of publication and mention of the grant of the patent: **11.03.2026**
(21) Application number: 23745791.6
(22) Date of filing: 03.01.2023
(51) Int. Cl.: G06F 9/48, G06F 1/3212, H04M 1/72403, H04M 1/73, G06F 1/3206, G06F 1/329, H04W 52/02

(54) **POWER CONSUMPTION CONTROL METHOD AND APPARATUS**
VERFAHREN UND VORRICHTUNG ZUR STEUERUNG DES STROMVERBRAUCHS
PROCÉDÉ ET APPAREIL DE RÉGULATION DE CONSOMMATION D'ÉNERGIE

(30) Priority: 28.01.2022 CN 202210108275
(43) Date of publication of application: 22.11.2023
(73) Proprietor: Honor Device Co., Ltd., Shenzhen, Guangdong 518040 (CN)
(72) Inventor: ZHAO, Jing, Shenzhen, Guangdong 518040 (CN); HUANG, Wen, Shenzhen, Guangdong 518040 (CN)
(74) Representative: Gill Jennings & Every LLP
(86) International application number: PCT/CN2023/070110
(87) International publication number: WO 2023/142906

(56) References cited:
- WO-A1-2021/043046
- CN-A- 107 943 570
- CN-A- 109 213 539
- CN-A- 111 077 979
- CN-A- 111 104 209
- CN-A- 111 522 425
- CN-A- 111 666 140
- CN-B- 104 239 196
- US-A1- 2013 346 991
- US-A1- 2018 321 972
- US-A1- 2019 324 814

## Description

This application claims priority to Chinese Patent Application No. 202210108275.1, filed with the China National Intellectual Property Administration on January 28, 2022 and entitled "POWER CONSUMPTION CONTROL METHOD AND APPARATUS."

### TECHNICAL FIELD

This application relates to the technical field of terminals, and in particular, to a power consumption control method and an apparatus.

### BACKGROUND

During the use of an electronic device, an application process or a system process may have an abnormal high load, which occupy a lot of resources of a processor, resulting in a high load or even full load of the processor. The high load or even full load of the processor of the electronic device may cause the application running in the foreground to freeze, and may also cause problems such as high power consumption and heat generation. How to reduce the impact of abnormally-high-load processes on processor performance is an urgent problem to be solved.

US2013/0346991A1 discloses a method of controlling an information processing apparatus includes detecting a first application program of which an execution result is displayed, obtaining a parameter correlating to the first application program, and determining, by a processor, the number of cores to be run in a CPU on a basis of the parameter.

CN104239196B discloses a method and a device for detecting abnormal operation of an application program and a mobile terminal.

US2018/321972A1 discloses a task management method and system, and a computer storage medium.

CN111077979A discloses a power consumption control method, a storage medium and an electronic device.

### SUMMARY

**In** a first aspect of the present invention there is provided a method according to claim 1. In a second aspect of the present invention there is provided an electronic device according to claim 9. In a third aspect of the present invention there is provided a computer-readable storage medium according to claim 10.

Embodiments of this application provide a power consumption control method and an apparatus, which can reduce processor resources occupied by an abnormally-high-load process, reduce the power consumption of a processor, and improve the performance of the processor.

To achieve the foregoing objective, the following technical solutions are used in the embodiments of this application:

According to a first aspect, a power consumption control method is provided, applicable to an electronic device, where the electronic device includes a processor, a first process runs on the processor, a first application corresponding to the first process runs in a background of the electronic device, and the method includes: reducing a processor utilization rate of the first process if it is detected that a load of the first process is higher than a preset load threshold and a running duration is greater than or equal to a preset duration threshold, and it is determined that the running of the first application is not perceived by a user.

Detecting that the load of the first process is higher than the preset load threshold and the running duration is greater than or equal to the preset duration threshold indicates that the first process is a high-load process. That the running of the first application is not perceived by the user indicates that the first process abnormally occupies processor resources in the background. When it is determined that the first process is an abnormally-high-load background process, the processor utilization rate of the first process is reduced. That is, the occupation of processor resources by the first process is reduced, and the processor resources are released. The processor resources may be used for another process to reduce processor loads, thereby reducing processor power consumption and improving processor performance.

Compared with directly killing the first process, the method for reducing the processor utilization rate of the first process provided by this embodiment of this application can reduce the probability of accidentally killing the background process and avoid causing a system abnormality.

With reference to the first aspect, in a possible implementation, a condition for reducing the processor utilization rate of the first process further includes: determining that the electronic device satisfies a preset abnormality condition, where the abnormality condition includes at least one of the following: a processor temperature of the electronic device is greater than a preset temperature threshold; a value by which a state of charge of a battery of the electronic device decreases within a preset duration is greater than a preset state of charge threshold; or a foreground application running on the electronic device freezes.

In combination with the abnormality of the electronic device, it may be more accurately determined that the first process is an abnormally-high-load background process.

With reference to the first aspect, in a possible implementation, the reducing the processor utilization rate of the first process includes: controlling the first process to sleep periodically, where when the first process sleeps, the first process does not use processor resources, that is, the processor utilization rate of the first process is reduced.

In a possible implementation, each sleep period includes a running time and a sleep time of the first process; and within the running time of the first process, the first process uses the processor resources based on scheduling of the processor. In this way, the first process may use the processor resources within a duration allocated to the first process by the processor. A sum of a length of the running time and a length of the sleep time is the sleep period.

With reference to the first aspect, in a possible implementation, the sleep time of the first process in each sleep period is equal, and the sleep time is a preset value.

With reference to the first aspect, in a possible implementation, a sleep time within a current sleep period is determined based on a current load of the processor and a preset target load.

With reference to the first aspect, in a possible implementation, the reducing the processor utilization rate of the first process includes: decreasing a scheduling priority of the first process, where the scheduling priority is used for indicating an order in which the processor allocates processor resources to the process. In this way, a probability that the first process is allocated processor resources is reduced, and the processor utilization rate of the first process is reduced. In an implementation, the decreasing a scheduling priority of the first process includes: increasing a value of the scheduling priority of the first process.

With reference to the first aspect, in a possible implementation, the reducing the processor utilization rate of the first process includes: reducing a processor utilization rate threshold of the first process.

With reference to the first aspect, in a possible implementation, that the running of the first application is not perceived by the user includes: the first application does not input or output audio; and the first application does not receive or transmit data through mobile communication or wireless communication.

With reference to the first aspect, in a possible implementation, that the first application runs in the background of the electronic device includes: the first application does not have a human-computer interaction interface; or a human-computer interaction interface of the first application stops being displayed on a screen of the electronic device.

According to a second aspect, an electronic device is provided. The electronic device has a function of implementing the method in the foregoing first aspect. The function may be implemented by using hardware, or may be implemented by hardware executing corresponding software. The hardware or software includes one or more modules corresponding to the above function.

According to a third aspect, an electronic device is provided, including: a processor and a memory, where the memory is configured to store computer-executable instructions. When the electronic device runs, the processor executes the computer-executable instructions stored in the memory, to cause the electronic device to perform the following steps.

Detecting that the load of the first process is higher than the preset load threshold and the running duration is greater than or equal to the preset duration threshold indicates that the first process is a high-load process. That the running of the first application is not perceived by the user indicates that the first process abnormally occupies processor resources in the background. When it is determined that the first process is an abnormally-high-load background process, the processor utilization rate of the first process is reduced. That is, the occupation of processor resources by the first process is reduced, and the processor resources are released. The processor resources may be used for another process to reduce processor loads, thereby reducing processor power consumption and improving processor performance.

Compared with directly killing the first process, the method for reducing the processor utilization rate of the first process provided by this embodiment of this application can reduce the probability of accidentally killing the background process and avoid causing a system abnormality.

With reference to the third aspect, in a possible implementation, a condition for reducing the processor utilization rate of the first process further includes: determining that the electronic device satisfies a preset abnormality condition, where the abnormality condition includes at least one of the following: a processor temperature of the electronic device is greater than a preset temperature threshold; a value by which a state of charge of a battery of the electronic device decreases within a preset duration is greater than a preset state of charge threshold; or a foreground application running on the electronic device freezes.

In combination with the abnormality of the electronic device, it may be more accurately determined that the first process is an abnormally-high-load background process.

With reference to the third aspect, in a possible implementation, the reducing the processor utilization rate of the first process includes: controlling the first process to sleep periodically, where when the first process sleeps, the first process does not use processor resources, that is, the processor utilization rate of the first process is reduced.

In a possible implementation, each sleep period includes a running time and a sleep time of the first process; and within the running time of the first process, the first process uses the processor resources based on scheduling of the processor. In this way, the first process may use the processor resources within a duration allocated to the first process by the processor. A sum of a length of the running time and a length of the sleep time is the sleep period.

With reference to the third aspect, in a possible implementation, the sleep time of the first process in each sleep period is equal, and the sleep time is a preset value.

With reference to the third aspect, in a possible implementation, a sleep time within a current sleep period is determined based on a current load of the processor and a preset target load.

With reference to the third aspect, in a possible implementation, the reducing the processor utilization rate of the first process includes: decreasing a scheduling priority of the first process, where the scheduling priority is used for indicating an order in which the processor allocates processor resources to the process. In this way, a probability that the first process is allocated processor resources is reduced, and the processor utilization rate of the first process is reduced. In an implementation, the decreasing a scheduling priority of the first process includes: increasing a value of the scheduling priority of the first process.

With reference to the third aspect, in a possible implementation, the reducing the processor utilization rate of the first process includes: reducing a processor utilization rate threshold of the first process.

With reference to the third aspect, in a possible implementation, that the running of the first application is not perceived by the user includes: the first application does not input or output audio; and the first application does not receive or transmit data through mobile communication or wireless communication.

With reference to the third aspect, in a possible implementation, the running of the first application in the background of the electronic device includes: the first application does not have a human-computer interaction interface; or a human-computer interaction interface of the first application stops being displayed on a screen of the electronic device.

According to a fourth aspect, an electronic device is provided, including: a processor, where the processor is configured to be coupled to the memory, and after reading an instruction in the memory, perform the power consumption control method in any of the first aspect based on the instruction.

According to a fifth aspect, a computer-readable storage medium is provided, the computer readable storage medium storing an instruction, and the instruction, when run on a computer, causing the computer to perform the power consumption control method in any of the first aspect.

According to a sixth aspect, a computer program product including an instruction is provided, the computer program product, when run on a computer, causing the computer to perform the power consumption control method in any of the first aspect.

According to a seventh aspect, an apparatus (which may be, for example, a chip system) is provided. The apparatus includes a processor, configured to support an electronic device in implementing a function involved in the first aspect. In a possible design, the apparatus further includes a memory. The memory is configured to store a program instruction and data necessary to the electronic device. The chip system, when being a chip system, may include a chip, or may include a chip and another discrete device.

For the technical effects brought by any one of the implementations in the second aspect to the seventh aspect, reference may be made to the technical effects brought by different implementations in the first aspect, and details are not described herein again.

### BRIEF DESCRIPTION OF DRAWINGS

FIG. 1A is a schematic diagram of a scenario to which a power consumption control method is applicable according to an embodiment of this application;
FIG. 1B is a schematic diagram of a scenario to which a power consumption control method is applicable according to an embodiment of this application;
FIG. 2A is a schematic structural diagram of hardware of an electronic device according to an embodiment of this application;
FIG. 2B is a schematic diagram of a software architecture of an electronic device according to an embodiment of this application;
FIG. 3 is a flowchart of a power consumption control method according to an embodiment of this application;
FIG. 4A is a schematic diagram of a scenario instance of a power consumption control method according to an embodiment of this application;
FIG. 4B is a schematic diagram of a scenario instance of a power consumption control method according to an embodiment of this application;
FIG. 5A is a schematic diagram of a scenario instance of a power consumption control method according to an embodiment of this application;
FIG. 5B is a schematic diagram of a scenario instance of a power consumption control method according to an embodiment of this application;
FIG. 5C is a schematic diagram of a scenario example of a power consumption control method according to an embodiment of this application;
FIG. 5D is a schematic diagram of a scenario example of a power consumption control method according to an embodiment of this application;
FIG. 6 is a schematic diagram of a scenario instance of a power consumption control method according to an embodiment of this application;
FIG. 7 is a schematic diagram of a scenario instance of a power consumption control method according to an embodiment of this application;
FIG. 8 is a schematic diagram of a scenario instance of a power consumption control method according to an embodiment of this application;
FIG. 9 is a schematic diagram of a scenario instance of a power consumption control method according to an embodiment of this application;
FIG. 10 is a schematic flowchart of a power consumption control method according to an embodiment of this application;
FIG. 11 is a schematic diagram of a scenario instance of a power consumption control method according to an embodiment of this application;
FIG. 12 is a schematic flowchart of a power consumption control method according to an embodiment of this application;
FIG. 13A is a schematic diagram of an implementation effect of a power consumption control method according to an embodiment of this application;
FIG. 13B is a schematic diagram of an implementation effect of a power consumption control method according to an embodiment of this application; and
FIG. 14 is a schematic diagram of a power consumption control apparatus according to an embodiment of this application.

### DESCRIPTION OF EMBODIMENTS

Technical solutions in embodiments of this application are described below with reference to the accompanying drawings in the embodiments of this application. In descriptions of the embodiments of this application, terms used in the following embodiments are merely intended to describe particular embodiments, and are not intended to limit this application. As used in this specification and the claims of this application, a singular expression form, "a", "the", "foregoing", "the", or "this", is intended to also include a "one or more" expression form, unless clearly indicated to the contrary in the context. It should be further understood that, in the following embodiments of this application, "at least one" and "one or more" mean one or more than two (including two). The term "and/or" is used to describe an association relationship between associated objects and represents that three relationships may exist. For example, A and/or B may represent: only A exists, both A and B exist, and only B exists, where A and B may be singular or plural. The character "/" generally indicates an "or" relationship between the associated objects.

Reference to "one embodiment" or "some embodiments" described in this specification means that a specific feature, structure, or characteristic described in combination with this embodiment is included in one or more embodiments of this application. Therefore, the statements "in one embodiment", "in some embodiments", "in some other embodiments", "in some additional embodiments", and the like in the differences in this specification do not necessarily refer to the same embodiment, but mean "one or more but not all embodiments", unless otherwise specially emphasized in other ways. The terms "comprise", "include", "have" and their variations mean "including but not limited to", unless otherwise specially emphasized in other ways. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In the embodiments of this application, the term such as "exemplarily" or "for example" is used to represent giving an example, an illustration, or a description. Any embodiment or design solution described by using "exemplarily" or "for example" in the embodiments of this application should not be explained as being more preferred or having more advantages than another embodiment or design solution. Exactly, use of the term such as "exemplarily" or "for example" is intended to present a related concept in a specific manner.

During the use of an electronic device, some applications (such as third-party applications or system applications) running in the background exist. The application runs in the background, that is, the application runs on the electronic device, but a human-computer interaction interface of the application is not displayed on a screen of the electronic device. For example, a user opens a chat application on the electronic device, and a human-computer interaction interface of the chat application is displayed. In the process of using the chat application, the user opens a video application again, and the electronic device displays a human-computer interaction interface of the video application. The human-computer interaction interface of the chat application is hidden or closed or completely blocked by the human-computer interaction interface of the video application, and the human-computer interaction interface of the chat application stops being displayed on the screen of the electronic device. That is to say, the chat application runs in the background. For example, a user closes a human-computer interaction interface of the music application after opening the music application and starting playing music. The music application continues to play music, that is, the music application runs in the background. For example, an operating system starts some system applications in the background, and these system applications have no human-computer interaction interface.

The applications running in the background (referred to as background applications in this application) usually do not occupy a lot of processor resources, or occupy more processor resources based on user needs (such as downloading large files quickly). The processor resources are the computing capability of the processor. However, in some scenarios, applications running in the background may have an abnormally high load. For example, if an instruction executed by the application enters an infinite loop and cannot exit normally, the abnormally high load may be caused. The application load is statistical information of a sum of a number of processes of the application that are being processed and wait to be processed by the processor within a period of time. An abnormally-high-load background application may abnormally occupy more processor resources, resulting in a high processor load or even a full processor load. The processor load is statistical information of a sum of a number of processes that are being processed and wait to be processed by the processor within a period of time, that is, the processor uses length statistics information of a queue. It may be understood that a lower processor load leads to a shorter time for a process waiting to be scheduled by the processor, and a higher processor load leads to a longer time for the process waiting to be scheduled by the processor. If an application runs in the foreground (referred to as a foreground application in this application), the abnormal high load of the background application may cause the foreground application to be unable to be scheduled in time, resulting in freezing (for example, dynamic pictures played by the application are discontinuous, and sounds during playback are intermittent), which affects user experience. Moreover, the abnormal high load of the background application may also bring about problems such as high power consumption and heating of the electronic device.

The processor in this embodiment of this application may include a central processing unit (central processing unit, CPU), a graphics processing unit (graphics processing unit, GPU), an image signal processor (image signal processor, ISP), a digital signal processor (digital signal processor, DSP), a neural network processing unit (neural-network processing unit, NPU), or the like. The processor is a CPU by way of example for description below. It may be understood that the power consumption control method provided in this embodiment of this application is also applicable to another type of processor.

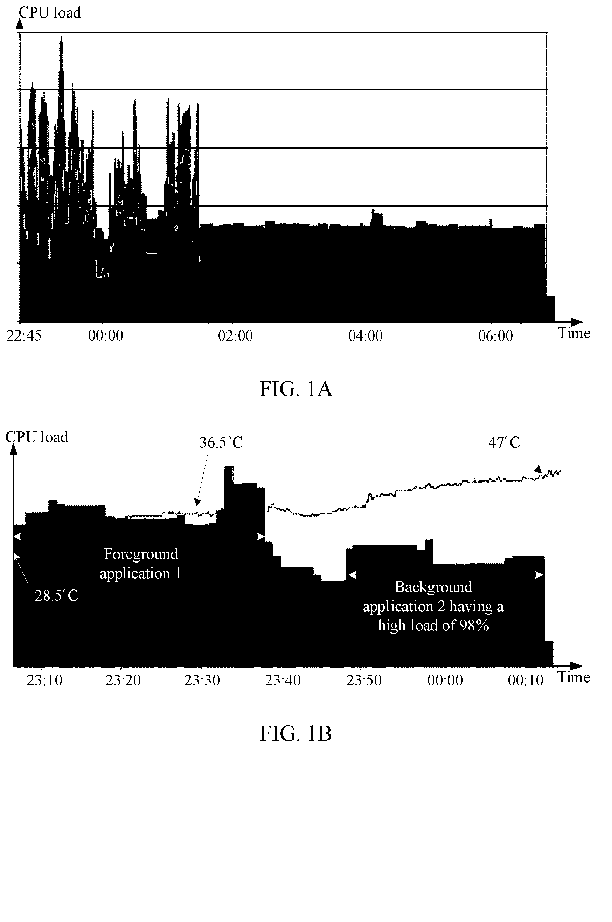

For example, FIG. 1A is a schematic diagram of a monitoring situation of a CPU load in the case of an abnormally high background application load on a mobile phone. As shown in FIG. 1A, between 22:45 and 1:30, a user uses a mobile phone normally, a foreground application runs on the mobile phones, and the CPU load changes in real time with a use condition of the user. The abnormally-high-load background application occupies a lot of CPU resources. When the user uses the mobile phone, the foreground application freezes, which affects user experience. After 1:30, the user did not use the mobile phone, the foreground application did not run on the mobile phone, and only the background application existed on the mobile phone, but the CPU load remained at a relatively high value. By monitoring a state of charge of the mobile phone, the remaining state of charge of the mobile phone is 80% at 22:45, 40% at 1:30, and close to 0 at 6:00. It can be seen that when the user does not use the mobile phone, the mobile phone consumes 40% of the state of charge within 4 and a half hours between 1:30 and 6:00. The background application consumes a lot of power. Through monitoring, it is found that between 22:45 and 6:00, total power consumption of the mobile phone is 1583.71 mAh (mAh), the power consumption of the foreground application is 3.44 mAh, and the power consumption of the background application is 1580.27 mAh. It may be seen that the power consumption of the background application is much greater than the power consumption of the foreground application. Higher power consumption of the background application greatly shortens a standby time of the mobile phone, and may also generate heat, degrading user experience.

For example, FIG. 1B is a schematic diagram of a monitoring situation of a CPU load in the case of an abnormally high background application load on another mobile phone. As shown in FIG. 1B, an application 1 on a mobile phone runs in the foreground (referred to as a foreground application 1 in this application), and a CPU load changes with the load of the application 1. After a period of time, the foreground application 1 stops running. After 23:48, an application 2 running in the background (referred to as a background application 2 in this application) has a high load of 98%, and the CPU load remains at a high value. By monitoring the CPU temperature, the CPU temperature rose from 28.5°C to 36.5 C and remained at 36.5 C during the running of the foreground application 1. After the foreground application 1 stopped running, the background application 2 had a high load of 98%, and the CPU temperature continued to rise and reached a maximum of 47°C. It can be seen that the high load of the background application may bring the problem of heating of the mobile phone.

In the prior art, if an abnormally-high-load background application is detected, an associated process of the background application is generally killed, and the associated process of the abnormally-high-load background application is cleaned up. The occupation of the CPU resources by the abnormally-high-load background application is eliminated. However, if a system process is killed, another system process associated with the system process may have a state error, resulting in an abnormal service function and unrecoverable problems. More seriously, after some important system processes are killed, the operating system restarts. After some abnormal processes are killed, if the operating system restarts, the problem of the abnormal high load may still occur.

An embodiment of this application provides a power consumption control method. If an abnormal high load of a background process (the background process is a process of a background application) is detected, a duration for which the CPU is used by the background process is reduced, which solves the problems such as freezing in use, fast power failure, and easy heating of the electronic device caused by the high load of the background process.

The power consumption control method provided in this embodiment of this application may be applied to the electronic device including a processor. The foregoing electronic device may include a mobile phone, a tablet computer, a notebook computer, a personal computer (personal computer, PC), an ultra-mobile personal computer (ultra-mobile personal computer, UMPC), a handheld computer, a netbook, a smart home device (such as a smart television, a smart screen, a large screen, a smart speaker, or a smart air conditioner), a personal digital assistant (personal digital assistant, PDA), a wearable device (such as a smart watch or a smart bracelet), an onboard device, a virtual reality device, or the like. This is not limited in this embodiment of this application.

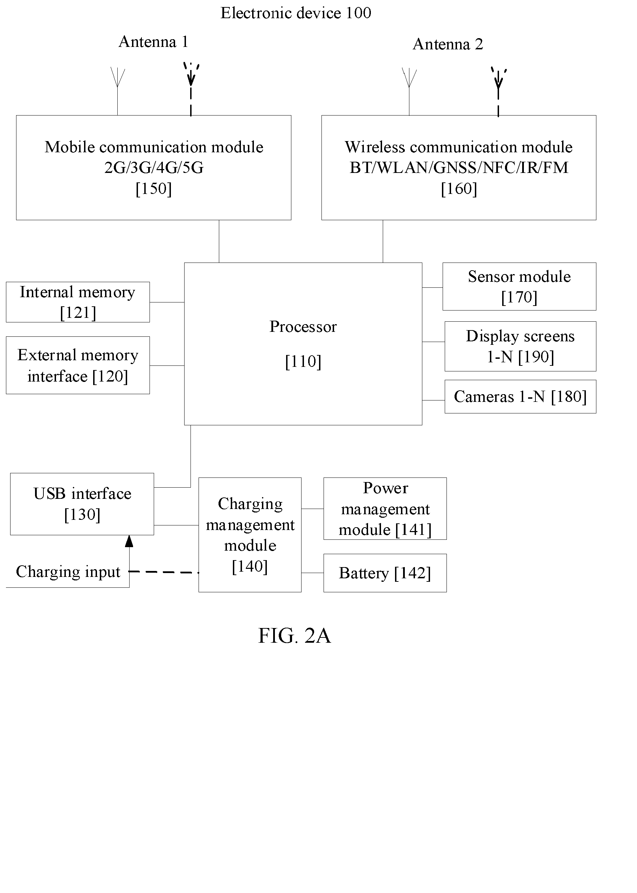

Referring to FIG. 2A, FIG. 2A is a schematic structural diagram of an electronic device 100 according to an embodiment of this application. As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, a sensor module 170, a camera 180, a display 190, and the like. The sensor module 170 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include a central processing unit (central processing unit, CPU), an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural-network processing unit, NPU), and/or the like. Different processing units may be separate devices, or may be integrated into one or more processors.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display 190, the camera 180, the wireless communication module 160, and the like. The power management module 141 may further be configured to monitor parameters such as a battery capacity, a quantity of battery cycles, and a battery health status (power leakage and impedance). In some other embodiments, the power management module 141 may alternatively be arranged in the processor 110. In some other embodiments, the power management module 141 and the charging management module 140 may also be arranged in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be multiplexed to increase the utilization rate of the antennas. For example, the antenna 1 may be multiplexed into a diversity antenna of a wireless local area network. In some other embodiments, the antennas may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and send the processed electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be arranged in the processor 110. In some embodiments, at least some of the functional modules of the mobile communication module 150 may be arranged in a same device as at least some modules of the processor 110.

The modem processor may include a modulator and a demodulator. The modulator is configured to modulate a to-be-transmitted low-frequency baseband signal into a medium and high frequency signal. The demodulator is configured to demodulate the received electromagnetic wave signal into a low-frequency baseband signal. Then the demodulator transfers the low-frequency baseband signal obtained through demodulation to the baseband processor for processing. The low-frequency baseband signal is processed by the baseband processor and then transferred to an application processor. The application processor outputs a sound signal through an audio device, or displays an image or a video through a display 190. In some embodiments, the modem processor may be an independent device. In some other embodiments, the modem processor may be independent of the processor 110, and is arranged in a same device as the mobile communication module 150 or another functional module.

The wireless communication module 160 may provide a solution to wireless communication such as a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology applied to the electronic device 100. The wireless communication module 160 may be one or more devices into which at least one communication processing module is integrated. The wireless communication module 160 receives an electromagnetic wave through the antenna 2, performs frequency modulation on and filters the electromagnetic wave signal, and sends a processed signal to the processor 110. The wireless communication module 160 may further receive a to-be-transmitted signal from the processor 110, perform frequency modulation on and amplify the to-be-transmitted signal, and convert the to-be-transmitted signal into an electromagnetic wave through the antenna 2 for radiation.

In some embodiments, the antenna 1 and the mobile communication module 150 are coupled, and the antenna 2 and the wireless communication module 160 of the electronic device 100 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 190, the application processor, and the like. The GPU is a microprocessor for image processing and connects the display 190 and the application processor. The GPU is configured to perform mathematical and geometric calculation, and is configured to render graphics. The processor 110 may include one or more GPUs that execute a program instruction to generate or change display information.

The display 190 is configured to display an image, a video, and the like. The display 190 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diode (quantum dot light emitting diode, QLED), and the like. In some embodiments, the electronic device 100 may include 1 or N displays 190. N is a positive integer greater than 1.

The electronic device 100 may implement a photographing function through the ISP, the camera 180, the video codec, the GPU, the display 190, the application processor, and the like.

The ISP is configured to process data fed back by camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may also optimize algorithms of noise point, brightness, and skin tone of the image. The ISP may further optimize parameters such as exposure and color temperature of a photographed scene. In some embodiments, the ISP may be arranged in the camera 193.

The camera 180 is configured to capture a still image or video. An optical image is generated for an object through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard formats such as RGB and YUV. In some embodiments, the electronic device 100 may include 1 or N cameras 180, and N is a positive integer greater than 1.

The digital signal processor is configured to process a digital signal, and in addition to a digital image signal, the digital signal processor may further process another digital signal. For example, when the electronic device 100 performs frequency selection, the digital signal processor is configured to perform Fourier transform, and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural network (neural network, NN) computing processor, and quickly processes input information by using a biological neural network structure such as a mode of transmission between human-brain nerve cells, and may further constantly perform self-learning. The NPU may be configured to implement an application such as intelligent cognition of the electronic device 100, for example, image recognition, face recognition, voice recognition, and text understanding.

The external memory interface 120 may be configured to be connected to an external storage card such as a micro SD card, to expand a storage capability of the electronic device 100. The external storage card communicates with the processor 110 through the external memory interface 120, to implement a data storage function. For example, files such as music and a video are stored into the external storage card.

The internal memory 121 may be configured to store computer-executable program code. The executable program code includes an instruction. The processor 110 runs the instruction stored in the internal memory 121, to implement various functional applications and data processing of the electronic device 100. The internal memory 121 may include a program storage area and a data storage area. The program storage area may store an operating system, an application required by at least one function (such as a sound playback function and an image display function), and the like. The data storage area may store data (such as audio data and an address book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

A software system of the electronic device 100 may use a layered architecture, an event-driven architecture, a micro core architecture, a micro service architecture, or a cloud architecture. In the embodiments of this application, a software structure of the electronic device 100 is described by using the hierarchical architecture as an example.

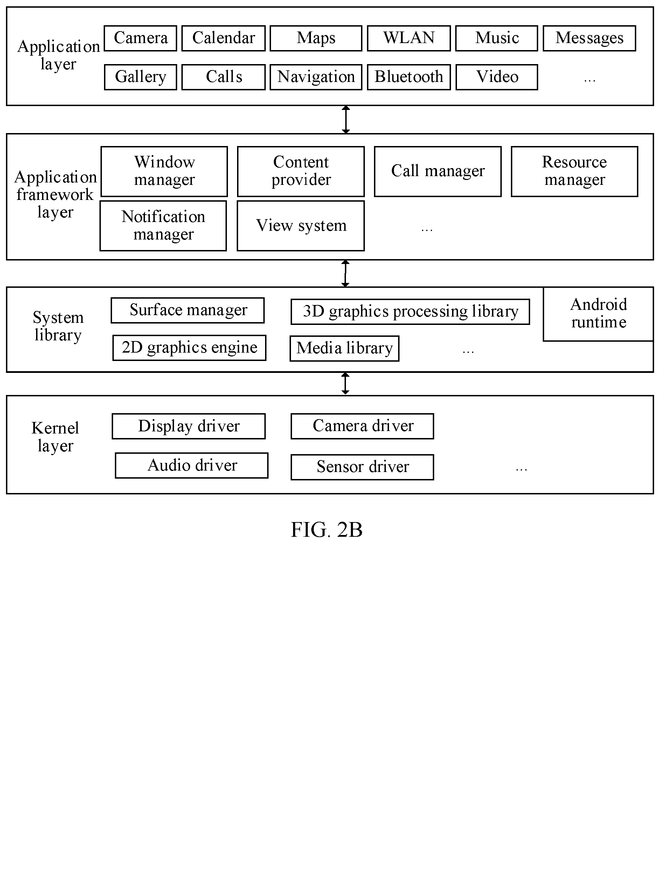

FIG. 2B is a block diagram of a software structure of an electronic device 100 according to an embodiment of the present invention.

In the hierarchical architecture, software is divided into several layers, and each layer has a clear role and task. The layers communicate with each other through a software interface. In some embodiments, an Android system is divided into four layers that are respectively an application layer, an application framework layer, an Android runtime (Android runtime) and system library, and a kernel layer from top to bottom.

The application layer may include a series of application packages.

As shown in FIG. 2B, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window application. The window manager may obtain a size of a display, determine whether there is a status bar, perform screen locking, take a screenshot of the screen, and the like.

The content provider is configured to store and obtain data and make the data accessible to an application. The data may include a video, an image, audio, calls that are made and answered, a browsing history and a bookmark, a phonebook, and the like.

The view system includes visual controls such as a control for displaying a text and a control for display a picture. The view system may be configured to construct an application. A display interface may include one or more views. For example, a display interface including a short message notification icon may include a view for displaying a text and a view for displaying a picture.

The phone manager is configured to provide a communication function for the electronic device 100, for example, call status management (including connected and hang-up).

The resource manager provides various resources such as a localized character string, an icon, an image, a layout file, and a video file for an application.

The notification manager enables an application to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears on a top status bar of the system in the form of a graph or a scroll bar text, for example, a notification of an application running on the background, or may be a notification that appears on the screen in the form of a dialog window. For example, text information is prompted on a status bar, a prompt tone is made, the electronic device vibrates, or an indicator light flashes.

The Android Runtime includes a core library and a virtual machine. The Android runtime is responsible for scheduling and managing the Android system.

The core library includes two parts: one part is a performance function that the Java language needs to invoke, and the other part is a core library of Android.

The application layer and the application framework layer are run in the virtual machine. The virtual machine executes Java files of the application layer and the application framework layer as binary files. The virtual machine is configured to execute functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of common audio and video formats, static image files, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display drive, a camera drive, an audio drive, and a sensor drive.

A power consumption control method provided in this embodiment of this application is described below in detail with reference to the accompanying drawings. It should be noted that, the power consumption control method provided in this embodiment of this application may be performed by a processor (a CPU is used as an example in this embodiment of this application), another processing unit (such as a chip) in the electronic device, an apparatus that can communicate with the electronic device to control the processor in the electronic device, or the like. The execution body of the method is not limited in this embodiment of this application.

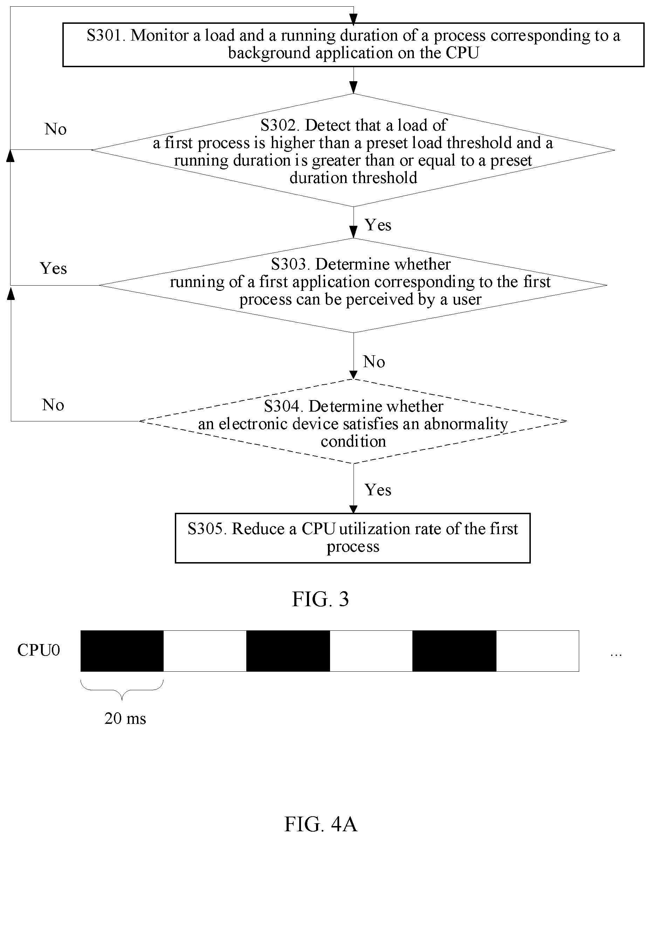

For example, as shown in FIG. 3, the power consumption control method provided in this embodiment of this application may include the following steps.

S301. Monitor a load and a running duration of a process corresponding to a background application on the CPU.

During running of an electronic device, some applications running in the background exist, that is, background applications. In this application, the process corresponding to the background application is referred to as a background process. In an implementation, if it is determined that the human-computer interaction interface of the application does not exist or the human-computer interaction interface of the application stops being displayed on the screen of the electronic device, it is determined that the application is a background application. The load of the process is statistical information of a sum of a number of processes of the process that are being processed and wait to be processed by the processor within a period of time.

S302. Detect that a load of the first process is higher than a preset load threshold and a running duration is greater than or equal to a preset duration threshold.

If it is determined that the background process meets the preset condition, it is determined that the background process has a high load. In an example, the preset condition includes: the load is higher than the preset load threshold and the running duration is greater than or equal to the preset duration threshold. For example, the load is higher than 30%, and the running duration is greater than or equal to 5 minutes. For example, the load is higher than 20%, and the running duration is greater than or equal to 8 minutes. For example, the load is higher than 10%, and the running duration is greater than or equal to 15 minutes. For example, the load is higher than 5%, and the running duration is greater than or equal to 60 minutes.

It is detected that the load of the first process is higher than the preset load threshold and the running duration is greater than or equal to the preset duration threshold, that is, the high load of the first process is detected.

If it is determined that the first process has a high load, S303 is performed. Otherwise, S301 is performed.

S303. Determine whether running of a first application corresponding to the first process is perceptible to a user.

In an example, that the running of the application is perceptible to the user includes: the application inputs or outputs audio. For example, a music playback application runs in the background and plays music, that is, audio output exists. For example, when the user makes a call, a calling application runs in the background, and inputs and outputs voice.

In an example, that the running of the application is perceptible to the user includes: the application receives or transmits data through mobile communication or wireless communication. For example, a download application (such as Thunder Download) and a navigation application (such as Gaode Map and Baidu Map) uploads or downloads data when running in the background. For example, a sports and health application obtains user location information through the GPS.

In an example, a news reading application and a financial management application does not input or output audio when running in the background, and does not transmit or receive data through mobile communication or wireless communication, which is imperceptible to the user.

If it is determined that the running of the first application is perceptible to the user, S301 is performed. In an implementation, if it is determined that the running of the first application is not perceived by the user, S304 is performed.

S304. Determine whether the electronic device satisfies an abnormality condition. If it is determined that the electronic device satisfies the abnormality condition, S305 is performed. If it is determined that the electronic device does not satisfy the abnormality condition, S301 is performed.

Optionally, it is further determined whether the electronic device satisfies the abnormality condition. The abnormality condition includes at least one of the following: a CPU temperature is greater than a preset temperature threshold; a value by which a state of charge of a battery decreases within a preset duration is greater than a preset state of charge threshold; or running of a foreground application freezes.

In some embodiments, the determining whether the electronic device satisfies an abnormality condition includes S3041-S3043.

S3041. Determine whether the CPU temperature is greater than the preset temperature threshold. If it is determined that the CPU temperature is greater than the preset temperature threshold, it is determined that the electronic device satisfies the abnormality condition. If it is determined that the CPU temperature is less than or equal to the preset temperature threshold, S3042 is performed.

In an implementation, the electronic device monitors the CPU temperature through a temperature sensor. For example, the preset temperature threshold is 40°C. If the temperature sensor detects that the CPU temperature is greater than 40°C, it is determined that the electronic device satisfies the abnormality condition.

S3042. Determine whether the value by which the state of charge of a battery decreases within the preset duration is greater than the preset state of charge threshold. If it is determined that the value by which the state of charge of the battery decreases within the preset duration is greater than the preset state of charge threshold, it is determined that the electronic device satisfies the abnormality condition. If it is determined that the value by which the state of charge of the battery decreases within the preset duration is less than or equal to the preset state of charge threshold, S3043 is performed.

For example, the preset duration is 10 minutes, and the preset state of charge threshold is 20%. If it is determined that the value by which the state of charge of the battery decreases within the preset duration is greater than 20%, it is determined that the electronic device satisfies the abnormality condition.

S3043. Determine whether freezing of the running of the foreground application exists. If it is determined that the freezing of the running of the foreground application exists, it is determined that the electronic device satisfies the abnormality condition. If it is determined that the freezing of the running of the foreground application does not exist, S301 is performed.

In an implementation, if it is determined that a frame rate of playback of the application is less than a preset first frame rate threshold, it is determined that running of the application freezes. For example, the preset first frame rate threshold is 20 fps.

In another implementation, by collecting statistics on historical data on the electronic device, it is determined that an average frame rate of normal playback of the foreground application is a first frame rate value (for example, 50 fps). If it is determined that a difference between a second frame rate value and the first frame rate value of playback of the application is greater than a preset second frame rate threshold, it is determined that the application freezes. The second frame rate value is less than the first frame rate value. For example, if the first frame rate value is 80 fps, the second frame rate value is 40 fps, and the second frame rate threshold is 30 fps, it is determined that the application freezes.

It should be noted that, an order in which the CPU temperature is first determined, then the state of charge of the battery is determined, and finally the running of the foreground application freezes is determined is used as an example for description. In practical application, different determination orders may exist, which do not affect the implementation effect of this embodiment of this application. For example, S3042 may be performed before S3041. For another example, S3043 may be performed before S3042. An execution sequence of steps S3041, S3042, and S3043 is not limited in this embodiment of this application.

It should be noted that, an execution sequence of steps S302, S303, and S304 is not limited in this embodiment of this application. In some other implementations, S303 or S304 may be performed first.

S305. Reduce a CPU utilization rate of the first process.

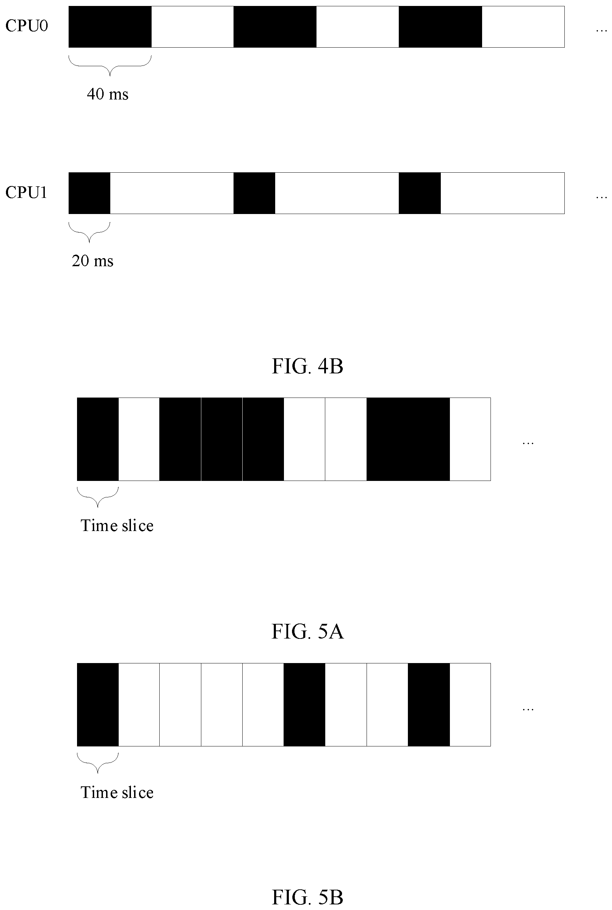

A duration for which a process uses CPU resources may be reflected by a CPU utilization rate of a process (that is, a processor utilization rate), and the CPU utilization rate of the process is a duration for which a process uses CPU resources within a unit duration. Reducing the CPU utilization rate of a process means reducing the duration for which the process uses CPU resources within a unit duration. The CPU utilization rate of the process = the duration for which the process uses CPU resources/the running duration of the CPU. For a single CPU, for example, as shown in FIG. 4A, the process 1 periodically runs for 20 ms and stops running for 20 ms. Then the CPU utilization rate of the process 1 = 20 ms/40 ms = 50%. For a plurality of CPUs or multi-core CPUs, the CPU utilization rate of the process = a sum of durations for which the process uses CPU resources/a sum of the running durations of the CPUs. For example, as shown in FIG. 4B, the process 1 periodically runs on CPU0 for 40 ms and stops running for 40 ms. The process 1 periodically runs on CPU1 for 20 ms and stops running for 60 ms. Then the CPU utilization rate of the process 1 = (40 ms + 20 ms)/(80 ms + 80 ms) = 37.5%.

The duration for which the abnormally-high-load background process uses CPU resources in unit time is reduced, that is, the occupation of CPU resources by abnormally-high-load background process is reduced, and the CPU resources may be used for another process (such as a foreground process), so as to avoid freezing of the foreground application caused by the abnormally-high-load background process. The duration for which the abnormally-high-load background process uses CPU resources in unit time is reduced, that is, the occupation of CPU resources by abnormally-high-load background process is reduced, and the CPU resources may be used for another process that normally runs, to accelerate the processing of another process and reduce the CPU load. In this way, the power consumption can be reduced, and the heating problem caused by the power consumption can be eliminated.

Manner I: By reducing a scheduling priority of an abnormally-high-load background process, a CPU utilization rate of the process is reduced.

CPU resources within a period of time are allocated to the process, that is, the CPU schedules the process. Generally, a plurality of processes cannot simultaneously use CPU resources in the same time period. If a plurality of processes wait to be scheduled by the CPU, in an implementation, the CPU schedules the processes in descending order of the scheduling priorities of the processes. The process with a high scheduling priority is more preferentially scheduled by the CPU than the process with a low scheduling priority. Optionally, processes with the same scheduling priority are scheduled according to the order in which the processes enter a scheduling queue. In an implementation, the scheduling priority is represented by a value of the scheduling priority. A larger value of the scheduling priority indicates a lower scheduling priority. For example, the scheduling priority is represented by integers from -20 to 19, and each digit represents one scheduling priority. -20 represent the highest scheduling priority, and 19 represent the lowest scheduling priority.

In an example, the CPU schedules the processes through round-robin. A duration of a time slice is a preset value, for example, 20 ms. The CPU allocates CPU resources within a time slice to a process, that is, schedules the process within a time slice. When a plurality of processes wait to use CPU resources, the CPU may allocate time slices to the processes in turn. In an implementation, the CPU allocates the time slices to the processes in descending order of the scheduling priorities of the processes. For example, the CPU saves a process scheduling queue. The processes waiting for CPU processing are sorted in the process scheduling queue in descending order of the scheduling priorities of the processes. If the scheduling priorities are the same, the processes are sorted according to the order in which the processes arrive in the process scheduling queue. At the start of each time slice, the CPU checks the process scheduling queue and allocates the time slice to the process at the head of the process scheduling queue (a process 1). The process 1 uses CPU resources within the time slice. After the end of the time slice, the process 1 stops using the CPU resources. The process 1 enters the process scheduling queue again. In this way, the process with a high scheduling priority has a high probability of being scheduled and a relatively high CPU utilization rate.

In an implementation, the probability that the process is scheduled by the CPU is reduced by reducing the scheduling priority of the abnormally-high-load background process. For example, a scheduling priority of a process is changed by adjusting the scheduling priority value of the process. In an example, the scheduling priority value of the abnormally-high-load background process may be increased to reduce the scheduling priority of the abnormally-high-load background process. In this way, another process (such as a foreground process, a normal background process) have priority to be scheduled by the CPU over the abnormally-high-load background process, which reduces the probability that the CPU resources are allocated to the process, thereby shortening the duration for which the process uses the CPU.

In an example, the scheduling priority value of the process 1 is -20. For example, as shown in FIG. 5A, within 10 time slices (200 ms), the CPU allocates 6 time slices to the process 1. A CPU utilization rate of the process 1 is 60%. When it is detected that the process 1 is an abnormally-high-load background process, the scheduling priority value of the process 1 is changed to 19, which means that the scheduling priority of the process 1 is reduced. The probability that the process 1 is at the head of the process scheduling queue is reduced, that is, the probability of being allocated a time slice is reduced. For example, as shown in FIG. 5B, within 10 time slices (200 ms), the CPU allocates 3 time slices to the process 1. The CPU utilization rate of the process 1 is reduced to 30%.

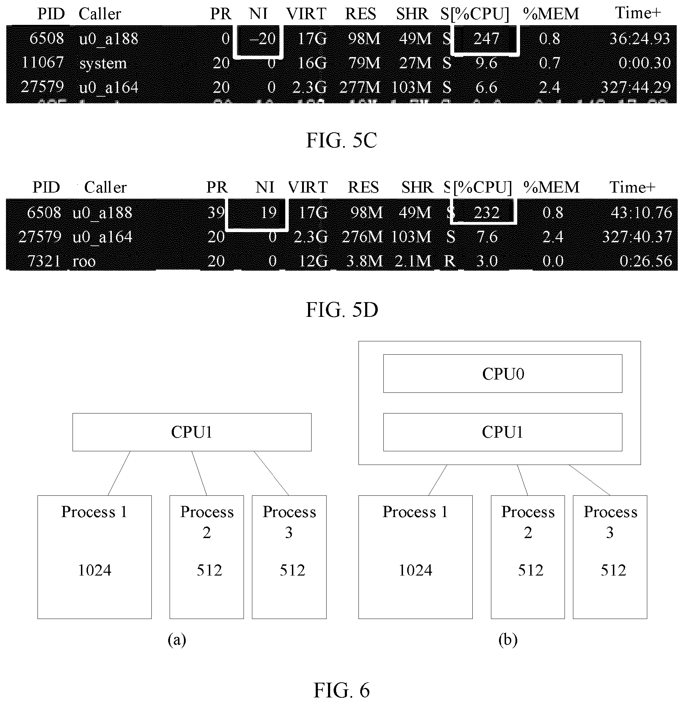

In another example, as shown in FIG. 5C, a scheduling priority (NI) of a background process with a process identifier (PID) of 6508 is -20 (the highest scheduling priority), which indicates that the process has a high probability of being called and has a process load of 247%. After it is detected that the process is an abnormally-high-load background process, the scheduling priority (NI) of the background process with the PID of 6508 is changed to 19 (the lowest scheduling priority) through a nice instruction. After a period of time, as shown in FIG. 5D, the process load of the background process with the process identifier (PID) of 6508 is reduced to 232%. It can be seen that after the scheduling priority of the abnormally-high-load background process is reduced, the process load of the process is reduced, that is, the running frequency of the process is reduced, thereby reducing the CPU utilization rate of the process.

Manner II: By setting a CPU utilization rate threshold of an abnormally-high-load background process, a CPU utilization rate of the process is reduced.

The CPU utilization rate threshold of the process is used to limit the CPU utilization rate of the process (the CPU utilization rate of the process is less than or equal to the CPU utilization rate threshold of the process), that is, to limit a CPU use duration of the process.

In some embodiments, if it is determined that the process is an abnormally-high-load background process, the CPU utilization rate threshold of the process is set as a first threshold. For example, if it is determined that process 1 is an abnormally-high-load background process, the CPU utilization rate threshold of the process 1 is set as the first threshold. In this way, a ratio of the CPU duration allocated to the process 1 by the CPU to each scheduling period is less than or equal to the first threshold, then the CPU use duration of the process 1 within one scheduling period is less than or equal to (first threshold * scheduling period), that is, the CPU utilization rate of the process 1 is less than or equal to the first threshold. For example, a value of the first threshold may be set to a smaller value. In this way, the CPU use duration of the abnormally-high-load background process is kept in a range of smaller values within each scheduling period, which reduces the duration for which the CPU is used in the abnormally-high-load background process.

In some other embodiments, the CPU utilization rate threshold of the process 1 is the first threshold, and if it is determined that the process 1 is an abnormally-high-load background process, the CPU utilization rate threshold of the process 1 is set as a second threshold. The second threshold is less than the first threshold. In this way, the CPU utilization rate of the abnormally-high-load background process is reduced, that is, the CPU use duration of the abnormally-high-load background process is reduced within each scheduling period, which reduces the duration for which the CPU is used in the abnormally-high-load background process.

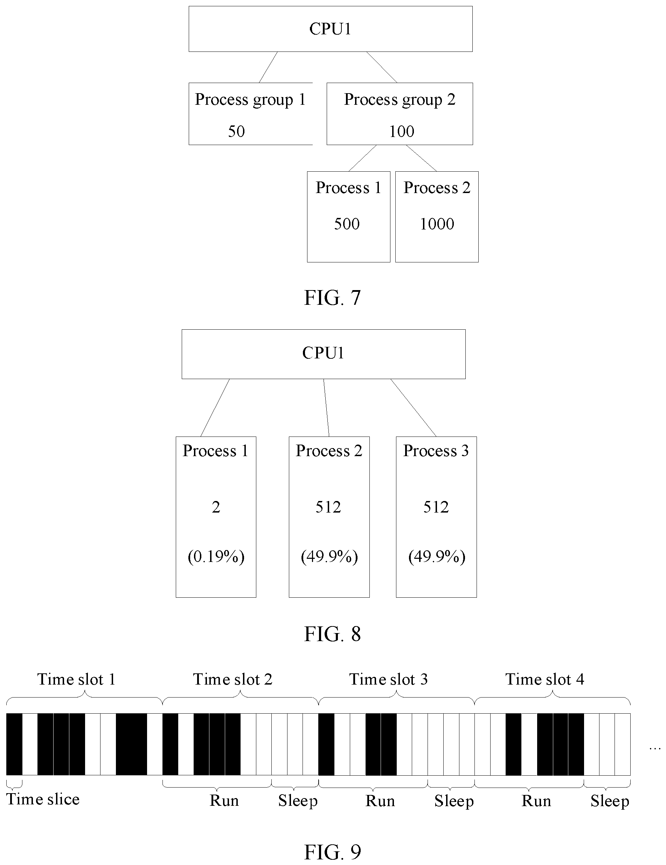

In an example, a relative weight of the CPU duration occupied by each process may be set through a first instruction, and the CPU utilization rate threshold of the process is obtained based on the relative weight of the CPU duration occupied by the process. The CPU utilization rate threshold of the first process = a sum of the relative weights of the CPU duration occupied by the first process/relative weights of the CPU durations occupied by all processes. The first instruction is cpu.shares by way of example. In an implementation, cpu.shares may be used to set the relative weight of the CPU duration occupied by each process. For example, cpu.shares is used to set the relative weight (shares value) of the CPU duration occupied by the process 1 to 1024, a shares value of a process 2 to 512, and a value of shares of a process 3 to 512. Then the CPU utilization rate threshold of the process 1 is 1024/(1204+512+512)=50%, the CPU utilization rate threshold of the process 2 is 512/(1204+512+512)=25%, and the CPU utilization rate threshold of the process 3 is 512/(1204+512+512)=25. For example, as shown in (a) of FIG. 6, for a single-core CPU, when the CPU schedules each process, the CPU utilization rate of the process 1 does not exceed 50%, that is, the CPU duration occupied by the process 1 does not exceed 50%*total running duration of a single CPU. The CPU utilization rate of the process 2 does not exceed 25%, that is, the CPU duration occupied by the process 2 does not exceed 25%*total running duration of a single CPU. The CPU utilization rate of the process 3 does not exceed 25%, that is, the CPU duration occupied by the process 3 does not exceed 25%*total running duration of a single CPU. For example, as shown in (b) of FIG. 6, for a dual-core CPU (including CPU0 and CPU1), when the CPU schedules each process, the CPU utilization rate of the process 1 does not exceed 50%, that is, the CPU duration occupied by the process 1 does not exceed 50%*(total running duration of CPU0 + total running duration of CPU1) = total running duration of a single CPU. The CPU utilization rate of the process 2 does not exceed 25%, that is, the CPU duration occupied by the process 2 does not exceed 25%*(total running duration of CPU0 + total running duration of CPU1) = 50%*total running duration of a single CPU. The CPU utilization rate of the process 3 does not exceed 25%, that is, the CPU duration occupied by the process 3 does not exceed 25%*(total running duration of CPU0 + total running duration of CPU1) = 50%*total running duration of a single CPU. In another implementation, the processes on the CPU are divided into a plurality of process groups, and each process group includes one or more processes. For example, a process group 1 includes processes of video applications, and a process group 2 includes processes of navigation applications. Cpu.shares may be used to set a relative weight of a CPU duration occupied by each process group, and cpu.shares may further be used to set the relative weight of a CPU duration occupied by each process in a process group. For example, as shown in FIG. 7, cpu.shares is used to set a shares value of the process group 1 to 50, set a shares value of the process group 2 to 100, set a shares value of the process 1 in the process group 2 to 500, and set a shares value of the process 2 in the process group 2 to 1000. Then the CPU utilization rate threshold of the process group 1 is 50/(50+100)=33%, the CPU utilization rate threshold of the process group 2 is 100/(50+100)=67%, and the CPU utilization rate threshold of the process 1 in the process group 2 is (500/(500+1000))*67%=22%, and the CPU utilization rate threshold of the process 2 in the process group 2 is (1000/(500+1000))*67%=44%. For a single-core CPU, when the CPU schedules the processes, a sum of CPU utilization rates of processes in the process group 1 does not exceed 33%, that is, a sum of durations for which the processes in the process group 1 occupy the CPU does not exceed 33%*total running duration of a single CPU. The CPU utilization rate of the process 1 in the process group 2 does not exceed 22%, that is, the duration for which the process 1 in the process group 2 occupies the CPU does not exceed 22%*total running duration of a single CPU. The CPU utilization rate of the process 2 in the process group 2 does not exceed 44%, that is, the duration for which the process 2 in the process group 2 occupies the CPU does not exceed 44%*total running duration of a single CPU. Optionally, in some embodiments, if the CPU has idle resources, the CPU utilization rate of the process may be greater than the corresponding CPU utilization rate threshold.

The relative weight of the CPU duration occupied by the abnormally-high-load background process is reduced through the first instruction, that is, the CPU utilization rate threshold of the abnormally-high-load background process is reduced, so that when the CPU schedules the process, the CPU utilization rate of the abnormally-high-load background process is reduced, that is, the duration for which the process occupies the CPU is reduced. For example, shares values of the process 1, the process 2, and the process 3 are shown in (a) of FIG. 6. The CPU utilization rate threshold of the process 1 is 50%, the CPU utilization rate threshold of the process 2 is 25%, and the CPU utilization rate threshold of the process 3 is 25%. When it is detected that the process 1 is an abnormally-high-load background process, the shares value of the process 1 is set to 2 through cpu.shares. In this way, as shown in FIG. 8, the CPU utilization rate threshold of the process 1 is changed to 2/(2+512+512)=0.19%, that is, when the CPU schedules the process, the CPU utilization rate of the process 1 does not exceed 0.19%, that is, the duration for which the process 1 uses the CPU is reduced.

In another example, the CPU utilization rate threshold of each process may be set through a second instruction. For example, the scheduling period of the CPU and the duration for which the process uses the CPU within one scheduling period are set through the second instruction. cpu.cfs_period_us and cpu.cfs_quota_us are used as examples. cpu.cfs_period_us is used to set the scheduling period of the CPU. For example, the scheduling period is set to 100000 (unit: microseconds). cpu.cfs_quota_us is used to set the duration (in microseconds) for which the process occupies the CPU within each scheduling period. For example, the scheduling period is set to 50000 (unit: microseconds). For a single-core CPU, the CPU utilization rate threshold of the process is 50000/100000=50%. For a plurality of single-core CPUs or multi-core CPUs, the CPU utilization rate threshold of the process is 50000/(100000*N), where n is a number of CPU cores, and N>1. For example, for a dual-core CPU, the CPU utilization rate threshold of the process is 50000/(100000*2)=25%. For another example, cpu.cfs_period _us=1000 and cpu.cfs_quota_us=2000, and then the CPU utilization rate threshold of the process is 2000/(1000*N). When N=2, the process occupies all resources of two CPU cores at most.

The CPU utilization rate threshold of the abnormally-high-load background process is reduced through the second instruction, so that when the CPU schedules the process, the CPU utilization rate of the abnormally-high-load background process is reduced, that is, the duration for which the process occupies the CPU is reduced. For example, the CPU utilization rate threshold of the process 1 is 50%. If it is detected that the process 1 is an abnormally-high-load background process, the CPU utilization rate threshold of the process is set to 1% (for example, set epu.cfs_period_us=1000, cpu.cfs_quota_us=10). In this way, the CPU utilization rate of the process does not exceed 1%, and the CPU utilization rate of the abnormally-high-load background process is reduced, that is, the duration for which the abnormally-high-load background process occupies the CPU is reduced.

Manner III: A CPU utilization rate of a process is reduced by periodically triggering the process to sleep.

The CPU schedules processes, that is, allocates CPU resources to the processes for use within a period of time. In the method provided in this embodiment, if an abnormally-high-load background process (a first process) is detected, the abnormally-high-load background process is controlled to sleep periodically. When the first process sleeps, the first process does not use the CPU resources. In other words, the CPU does not allocate CPU resources to the process during sleep of the process. For example, the CPU schedules the processes through round-robin. If it is determined that the first process sleeps within a period of time, the CPU does not allocate time slices to the first process within the period of time, that is, the first process does not participate in round-robin. In this way, the abnormally-high-load background process does not use CPU resources when sleeping, which reduces the duration for which the process uses the CPU in unit duration, that is, reduces the CPU utilization rate of the abnormally-high-load background process.

In this embodiment of this application, a time interval at which a process periodically sleeps is referred to as a time slot, and the time interval or the time slot is also referred to as a sleep period. A duration of a time slot is a preset value, for example, one time slot =M time slices, and M is an integer greater than 1. For example, a duration of one time slot is 200 ms. Each time slot includes a running time of the first process and a sleep time of the first process. Within the running time of the first process, the first process may be scheduled by the CPU to use CPU resources. Within the sleep time of the first process, the CPU does not schedule the first process, and the first process does not use the CPU resources.

In an implementation, in each time slot, a length of the sleep time (a sleep duration) of the first process is equal. For example, as shown in FIG. 9, the CPU schedules each process through round-robin, where a duration of a time slice is 20 ms, a duration of the time slot is 200 ms, and each time slot includes 10 time slices. The first process is an abnormally-high-load background process, and in a time slot 1, the CPU utilization rate of the first process is 60%. Starting from a time slot 2, the first process periodically sleeps, a running duration in each time slot is a first running duration (140 ms), and the sleep duration is a first sleep duration (60 ms). The first running duration and the first sleep duration are preset values.

In an implementation, after determining the first running duration and the first sleep duration, the CPU allocates CPU resources to the first process according to the CPU scheduling rules (such as round-robin) within the first running duration, and does not allocate CPU resources to the first process within the first sleep duration.

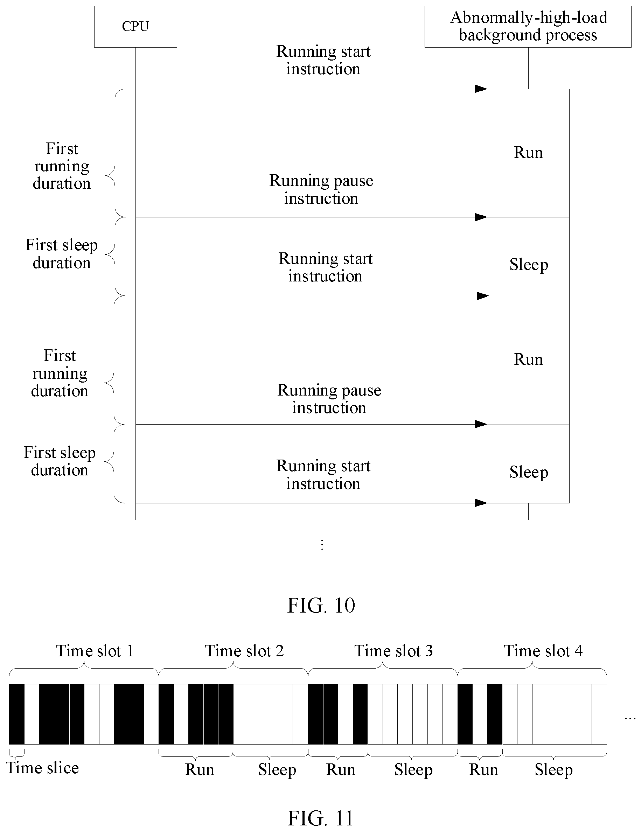

In an implementation, as shown in FIG. 10, the CPU periodically sends a running start instruction and a running pause instruction to the first process. The running start instruction is used to instruct the first process to start running, and the running pause instruction is used to instruct the first process to start sleeping. After the CPU sends the running start instruction to the first process, the first process starts running based on the running start instruction, so as to be scheduled by the CPU. After the first running duration, the CPU sends the running pause instruction to the first process, and the first process starts sleeping based on the running pause instruction. After the first sleep duration, the CPU sends the running start instruction to the first process, and the first process starts running based on the running start instruction. In this way, the first process periodically runs for the first running duration and sleeps for the first sleep duration.

It should be noted that, in FIG. 9, the running time is 7 consecutive time slices, and the sleep time is 3 consecutive time slices. In some other implementations, the running time may not be consecutive time slices, and the sleep time may not be consecutive time slices. The sleep time in each time slot may not be at the end of the time slot, and the sleep time may be at any position in the time slot. Moreover, in different time slots, a position of the sleep time may be the same or different. This is not limited in this embodiment of this application.

As shown in FIG. 9, within the running time of the first process, the CPU schedules each process through round-robin. In the time slot 2, the CPU allocates four time slices to the first process, and the CPU utilization rate of the first process in the time slot 2 is 40%. In a time slot 3, the CPU allocates three time slices to the first process, and the CPU utilization rate of the first process in the time slot 3 is 30%. In a time slot 4, the CPU allocates four time slices to the first process, and the CPU utilization rate of the first process in the time slot 2 is 40%.

It may be understood that in some other implementations, the CPU may schedule the processes in other manners. For example, the CPU schedules the processes in descending order of scheduling priorities, and schedules another process after one process quits using CPU resources. The power consumption control method provided in this embodiment of this application does not limit the scheduling mode of the CPU.

In another implementation, in each time slot, a length of the sleep time (a sleep duration) of the first process may not be equal. For example, as shown in FIG. 11, the CPU schedules each process through round-robin, where a duration of a time slice is 20 ms, a duration of the time slot is 200 ms, and each time slot includes 10 time slices. In the time slot 1, the CPU utilization rate of the first process is 60%. It is detected that the first process is an abnormally-high-load background process, and the first process periodically sleeps starting from the time slot 2. In an implementation, at the start of each time slot, based on a current CPU load and a preset target CPU load, the running duration and the sleep duration of the first process in the current time slot are calculated. For example, the target CPU load may be obtained by collecting statistics on historical data of running of the CPU. For example, based on the historical data, when the CPU load is less than or equal to 20%, a battery temperature is less than a preset temperature threshold, and the preset target CPU load is determined as 20%.

For example, at the start of the time slot 2, a current CPU load of 50% is obtained, the current CPU load is greater than the target CPU load, the running duration in the time slot 2 is determined as the first running duration (for example, 100 ms), and the sleep duration is determined as the first sleep duration (for example, 100 ms). For example, the CPU has allocated four time slices to the first process through round-robin within the first running duration. The CPU utilization rate of the first process in the time slot 2 is 40%. Since the CPU utilization rate of the first process (an abnormally-high-load background process) is reduced in the time slot 2, the CPU load is reduced. At the start of the time slot 3, a current CPU load of 40% is obtained, the current CPU load is greater than the target CPU load, and it is determined that the sleep duration in the time slot 3 is increased. For example, it is determined that the running duration in the time slot 3 is a second running duration (for example, 80 ms), and the sleep duration is a second sleep duration (for example, 120 ms). The second running duration is less than the first running duration, and the second sleep duration is greater than the first sleep duration. For example, the CPU has allocated three time slices to the first process through round-robin within the second running duration. The CPU utilization rate of the first process in the time slot 3 is 30%. Since the CPU utilization rate of the first process (an abnormally-high-load background process) is reduced in the time slot 3, the CPU load is reduced. At the start of the time slot 4, a current CPU load of 25% is obtained, the current CPU load is greater than the target CPU load, and it is determined that the sleep duration in the time slot 4 is increased. For example, it is determined that the running duration in the time slot 4 is a third running duration (60 ms), and the sleep duration is a third sleep duration (140 ms). The third running duration is less than the second running duration, and the third sleep duration is greater than the second sleep duration. For example, the CPU has allocated two time slices to the first process through round-robin within the third running duration. The CPU utilization rate of the first process in the time slot 4 is 20%. Since the CPU utilization rate of the first process (an abnormally-high-load background process) is reduced in the time slot 4, the CPU load is reduced. At the start of a time slot 5, a current CPU load of 18% is obtained, which is less than the target CPU load. It is determined that the sleep duration in the time slot 5 is the third sleep duration, which is equal to the sleep duration in the time slot 4.

In an implementation, after determining the running duration and the sleep duration in each time slot, the CPU allocates CPU resources to the first process according to the CPU scheduling rules (such as round-robin) within the running duration, and does not allocate CPU resources to the first process within the sleep duration.

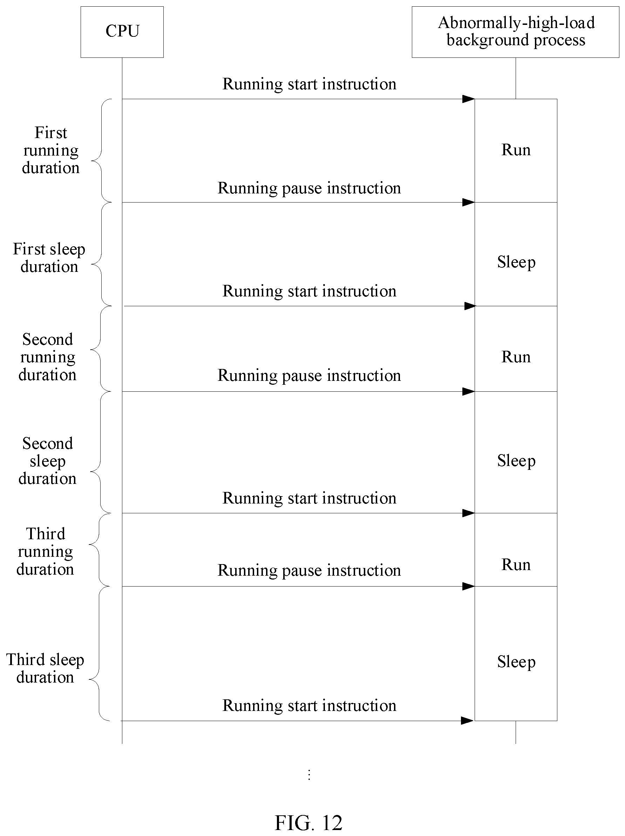

In an implementation, as shown in FIG. 12, after the CPU sends the running start instruction to the first process, the first process starts running based on the running start instruction, so as to be scheduled by the CPU. After the first running duration, the CPU sends the running pause instruction to the first process, and the first process starts sleeping based on the running pause instruction. After the first sleep duration, the CPU sends the running start instruction to the first process, and the first process starts running based on the running start instruction, so as to be scheduled by the CPU. After the second running duration, the CPU sends the running pause instruction to the first process, and the first process starts sleeping based on the running pause instruction. After the second sleep duration, the CPU sends the running start instruction to the first process, and the first process starts running based on the running start instruction, so as to be scheduled by the CPU. After the third running duration, the CPU sends the running pause instruction to the first process, and the first process starts sleeping based on the running pause instruction. After the third sleep duration, the CPU sends the running start instruction to the first process, and the first process starts running based on the running start instruction, so as to be scheduled by the CPU. In this way, the first process sleeps periodically.

According to the power consumption control method provided in this embodiment of this application, if an abnormally-high-load background process is detected, the CPU utilization rate of the background process is reduced, thereby reducing the CPU load, which solves the problems such as freezing in use, fast power failure, and easy heating of the electronic device caused by the high load of the background process.

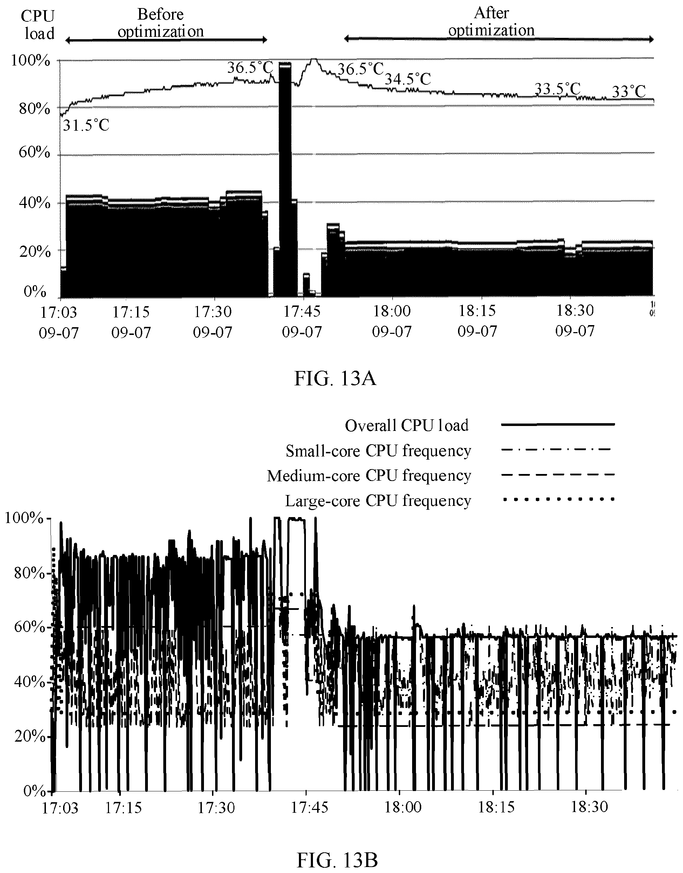

In an example, as shown in FIG. 13A, when the power consumption control method provided in this embodiment of this application is not adopted (before optimization), the CPU load is kept at a high value (about 40%) due to the abnormally high load of the background process, and the CPU temperature rises from 31.5°C to 36.5°C. After the power consumption control method provided in this embodiment of this application is adopted (after optimization), the duration for which the background process occupies the CPU is reduced, the CPU load is reduced to about 20%, and the CPU temperature is reduced to 33°C.

In another example, as shown in FIG. 13B, due to the existence of the abnormally-high-load background process, before 17:45, the overall load of the CPU was relatively high. After the power consumption control method provided in this embodiment of this application is used, the overall load of the CPU is reduced from 86% to 56%, and a small-core CPU frequency and a medium-core CPU frequency are significantly reduced. Due to existence of the foreground application, a large-core CPU frequency remains basically unchanged.

It may be understood that to achieve the foregoing functions, the electronic device provided in the embodiments of this application includes corresponding hardware structures and/or software modules for performing the functions. A person skilled in the art should be easily aware that, in combination with units and algorithm steps of the examples described in the embodiments disclosed in this specification, the embodiments of this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of the embodiments of this application.

In the embodiments of this application, functional modules of the electronic device may be divided based on the foregoing method examples. For example, each functional module may be divided based on each function, or two or more functions may be integrated into one processing module. The integrated module may be implemented in the form of hardware, or may be implemented in a form of a software functional module. It should be noted that, in the embodiments of this application, the module division is an example, and is merely logical function division, and additional division manners may exist during actual implementation.

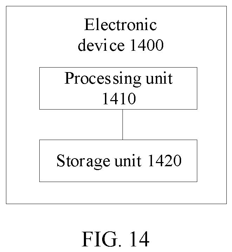

In an example, referring to FIG. 14, FIG. 14 is a schematic diagram of a possible structure of the electronic device involved in the foregoing embodiments. The electronic device 1400 includes a processing unit 1410 and a storage unit 1420.

The processing unit 1410 is configured to control and manage an operation of the electronic device 1400. The storage unit 1420 is configured to store program code and data of the electronic device 1400, and the processing unit 1410 is configured to invoke the program code stored in the storage unit 1420 to perform the steps in the above method embodiments.

Certainly, unit modules in the electronic device 1400 include, but are not limited to, the processing unit 1410 and the storage unit 1420. For example, the electronic device 1400 may further include a display unit, a power unit, and the like. The display unit is configured to display a display interface of the electronic device 1400. The power unit is configured to supply power to the electronic device 1400.

The processing unit 1410 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or a combination thereof. The storage unit 1420 may be a memory. The display unit may be a display, or the like.

For example, the processing unit 1410 is a processor (the processor 110 shown in FIG. 2A), the storage unit 1420 may be a memory (the internal memory 121 shown in FIG. 2A), and the display unit may be a display (the display 190 shown in FIG. 2A). The electronic device 1400 provided in this embodiment of this application may be the electronic device 100 shown in FIG. 2A. The processor, the memory, the display, and the like may be connected together, for example, by using a bus. The processor invokes the program code stored in the memory to perform the steps in the above method embodiments.

An embodiment of this application further provides a chip system. The chip system includes at least one processor and at least one interface circuit. The processor may be interconnected to the interface circuit by using a line. For example, the interface circuit may be configured to receive a signal from another apparatus (such as a memory of an electronic device). For another example, the interface circuit may be configured to transmit a signal to another apparatus (for example, a processor). For example, the interface circuit may read an instruction stored in the memory and send the instruction to the processor. The instruction, when executed by the processor, may cause the electronic device to perform the steps in the foregoing embodiments. Certainly, the chip system may further include another discrete device. This is not specifically limited in this embodiment of this application.

An embodiment of this application further provides a computer-readable storage medium, including a computer instruction, the computer instruction, when run on the electronic device, causing the electronic device to perform the functions or steps performed by the mobile phone in the method embodiments.

An embodiment of this application further provides a computer program product, the computer program product, when run on a computer, causing the computer to perform the functions or steps performed by the mobile phone in the method embodiments.

Through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules as required. That is, an inner structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely a logical function division and may be another division manner during actual implementation. For example, a plurality of units or components may be combined or integrated into another apparatus, or some features may be ignored or not performed. In addition, the displayed or discussed mutual couplings or direct couplings or communication connection may be implemented by using some interfaces. The indirect coupling or communication connection between the apparatuses or units may be implemented in electronic, mechanical, or other forms.

The units described as separate parts may or may not be physically separated. A component displayed as a unit may be one physical unit or a plurality of physical units, that is, may be located at one position, or may be arranged at different positions. Some or all of the units may be selected according to actual needs to achieve the objectives of the solutions of the embodiments.

In addition, functional units in embodiments of this application may be integrated into one processing unit, each of the units may exist alone physically, or two or more units are integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for enabling a device (which may be a single-chip microcomputer, a chip, or the like) or a processor (processor) to perform all or some of the steps of the methods described in the embodiments of this application. The storage medium described above includes: any medium that can store program code, such as a USB flash drive, a removable hard disk, a read only memory (read only memory, ROM), a random access memory (random access memory, RAM), a magnetic disk, or a compact disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A power consumption control method, applicable to an electronic device, wherein the electronic device comprises a processor (110), a first process runs in the processor, a first application corresponding to the first process runs in a background of the electronic device, and the method comprises:
detecting (s301) that a load of the first process is higher than a preset load threshold and a running duration is greater than or equal to a preset duration threshold;
determining (s303) that the running of the first application is not perceived by a user; and
reducing (s305) a processor utilization rate of the first process; wherein before the reducing a processor utilization rate of the first process, the method further comprises:
determining that the electronic device satisfies a preset abnormality condition, wherein
the abnormality condition comprises at least one of the following:
a processor temperature of the electronic device is greater than a preset temperature threshold;
a value by which a state of charge of a battery of the electronic device decreases within a preset duration is greater than a preset state of charge threshold; or
a foreground application running on the electronic device freezes;
wherein the reducing a processor utilization rate of the first process comprises controlling the first process to sleep periodically, wherein when the first process sleeps, the first process does not use processor resources; and
determining a sleep time within a current sleep period based on a current load of the processor and a preset target load.

2. The method according to claim 1, wherein each sleep period comprises a running time and the sleep time of the first process; and within the running time of the first process, the first process uses the processor resources based on scheduling of the processor.

3. The method according to claim 1, wherein the reducing a processor utilization rate of the first process comprises:
decreasing a scheduling priority of the first process, wherein the scheduling priority is used for indicating an order in which the processor allocates processor resources to the process.

4. The method according to claim 3, wherein the decreasing a scheduling priority of the first process comprises:
increasing a value of the scheduling priority of the first process.

5. The method according to claim 1, wherein the reducing a processor utilization rate of the first process comprises:
reducing a processor utilization rate threshold of the first process.

6. The method according to any one of claims 1 to 5, wherein that the running of the first application is not perceived by the user comprises:
the first application does not input or output audio; and the first application does not receive or transmit data through mobile communication or wireless communication.

7. The method according to any one of claims 1 to 6, wherein that the first application runs in the background of the electronic device comprises:
the first application does not have a human-computer interaction interface.

8. The method according to any one of claims 1 to 6, wherein that the first application runs in the background of the electronic device comprises:
a human-computer interaction interface of the first application stops being displayed on a screen of the electronic device.

9. An electronic device, comprising a processor and a memory, wherein the memory is coupled to the processor, the memory is configured to store computer program code, and the computer program code comprises a computer instruction, the computer instruction, when executed by the processor, causing the electronic device to perform the method according to any one of claims 1 to 8.

10. A computer-readable storage medium, comprising a computer instruction, the computer instruction, when run on an electronic device, causing the electronic device to perform the method according to any one of claims 1 to 8.

## Patentansprüche

1. Ein Verfahren zur Steuerung des Stromverbrauchs, anwendbar auf ein elektronisches Gerät, wobei das elektronische Gerät einen Prozessor (110) umfasst, ein erster Prozess auf dem Prozessor ausgeführt wird, eine erste Anwendung, die dem ersten Prozess entspricht, im Hintergrund des elektronischen Geräts ausgeführt wird und das Verfahren Folgendes umfasst:
Erkennen (s301), dass die Last des ersten Prozesses höher als ein voreingestellter Lastschwellenwert ist und die Laufzeit größer oder gleich einem voreingestellten Laufzeitschwellenwert ist;
Feststellen (s303), dass die Ausführung der ersten Anwendung von einem Benutzer nicht wahrgenommen wird; und
Reduzieren (s305) der Prozessorauslastung des ersten Prozesses; wobei vor dem Reduzieren der Prozessorauslastung des ersten Prozesses das Verfahren weiterhin Folgendes umfasst:
Feststellen, dass das elektronische Gerät eine voreingestellte Abnormalitätsbedingung erfüllt, wobei
die Abnormalitätsbedingung mindestens eine der folgenden umfasst:
eine Prozessor-Temperatur des elektronischen Geräts ist größer als ein voreingestellter Temperaturschwellenwert;
ein Wert, um den der Ladezustand des Akkus des elektronischen Geräts innerhalb einer voreingestellten Zeitspanne abnimmt, ist größer als ein voreingestellter Schwellenwert für den Ladezustand; oder
eine im Vordergrund ausgeführte Anwendung auf dem elektronischen Gerät friert ein;
wobei das Reduzieren der Prozessorauslastung des ersten Prozesses darin besteht, den ersten Prozess periodisch in den Schlafzustand zu versetzen, wobei der erste Prozess während des Schlafs keine Prozessorressourcen verwendet; und
Bestimmen einer Schlafzeit innerhalb einer aktuellen Schlafperiode basierend auf der aktuellen Prozessorlast und einer voreingestellten Ziel-Last.

2. Verfahren gemäß Anspruch 1, wobei jede Schlafperiode eine Laufzeit und die Schlafzeit des ersten Prozesses umfasst; und während der Laufzeit des ersten Prozesses nutzt der erste Prozess die Prozessorressourcen entsprechend der Prozessorplanung.

3. Verfahren gemäß Anspruch 1, wobei das Reduzieren der Prozessorauslastung des ersten Prozesses Folgendes umfasst:
Verringern der Planungspriorität des ersten Prozesses, wobei die Planungspriorität verwendet wird, um die Reihenfolge anzugeben, in der der Prozessor Ressourcen dem Prozess zuweist.

4. Verfahren gemäß Anspruch 3, wobei das Verringern der Planungspriorität des ersten Prozesses Folgendes umfasst:
Erhöhen eines Werts der Planungspriorität des ersten Prozesses.

5. Verfahren gemäß Anspruch 1, wobei das Reduzieren der Prozessorauslastung des ersten Prozesses Folgendes umfasst:
Reduzieren des Schwellenwerts für die Prozessorauslastung des ersten Prozesses.

6. Verfahren nach einem der Ansprüche 1 bis 5, wobei das Ausführen der ersten Anwendung vom Benutzer nicht wahrgenommen wird, umfasst:
die erste Anwendung gibt keinen Ton ein oder aus; und die erste Anwendung empfängt oder überträgt keine Daten über Mobilfunk- oder drahtlose Kommunikation.

7. Verfahren nach einem der Ansprüche 1 bis 6, wobei die erste Anwendung im Hintergrund des elektronischen Gerätes ausgeführt wird, umfasst:
die erste Anwendung verfügt über keine Mensch-Maschine-Interaktionsschnittstelle.

8. Verfahren nach einem der Ansprüche 1 bis 6, wobei die erste Anwendung im Hintergrund des elektronischen Gerätes ausgeführt wird, umfasst:
eine Mensch-Maschine-Interaktionsschnittstelle der ersten Anwendung wird nicht mehr auf einem Bildschirm des elektronischen Gerätes angezeigt.

9. Elektronisches Gerät, umfassend einen Prozessor und einen Speicher, wobei der Speicher mit dem Prozessor gekoppelt ist, der Speicher eingerichtet ist, Computerprogrammcode zu speichern, und der Computerprogrammcode einen Computerbefehl umfasst, wobei der Computerbefehl beim Ausführen durch den Prozessor das elektronische Gerät veranlasst, das Verfahren nach einem der Ansprüche 1 bis 8 auszuführen.

10. Computerlesbares Speichermedium, umfassend einen Computerbefehl, wobei der Computerbefehl beim Ausführen auf einem elektronischen Gerät das elektronische Gerät veranlasst, das Verfahren nach einem der Ansprüche 1 bis 8 auszuführen.

## Revendications

1. Un procédé de contrôle de la consommation d'énergie, applicable à un dispositif électronique, ledit dispositif électronique comprenant un processeur (110), un premier processus s'exécutant dans le processeur, une première application correspondant au premier processus s'exécutant en arrière-plan du dispositif électronique, le procédé comprenant :
détecter (s301) qu'une charge du premier processus est supérieure à un seuil de charge prédéfini et que la durée d'exécution est supérieure ou égale à un seuil de durée prédéfini ;
déterminer (s303) que l'exécution de la première application n'est pas perçue par un utilisateur ; et
réduire (s305) le taux d'utilisation du processeur par le premier processus ; avant la réduction du taux d'utilisation du processeur par le premier processus, le procédé comprend en outre :
déterminer que le dispositif électronique satisfait à une condition d'anomalie prédéfinie, dans laquelle
la condition d'anomalie comprend au moins une des situations suivantes :
la température du processeur du dispositif électronique est supérieure à un seuil de température prédéfini ;
la valeur de diminution de l'état de charge de la batterie du dispositif électronique sur une durée prédéfinie est supérieure à un seuil d'état de charge prédéfini ; ou
une application au premier plan exécutée sur le dispositif électronique se fige ;
dans lequel la réduction du taux d'utilisation du processeur par le premier processus comprend le contrôle du premier processus pour qu'il passe périodiquement en veille, et lorsque le premier processus est en veille, il n'utilise pas les ressources du processeur ; et
déterminer une durée de veille au cours de la période de veille actuelle en fonction de la charge actuelle du processeur et d'une charge cible prédéfinie.

2. Le procédé selon la revendication 1, dans lequel chaque période de veille comprend une période d'exécution et une période de veille du premier processus ; et pendant la période d'exécution du premier processus, celui-ci utilise les ressources du processeur selon la planification du processeur.

3. Le procédé selon la revendication 1, dans lequel la r é duction du taux d'utilisation du processeur par le premier processus comprend :
diminuer la priorité de planification du premier processus, ladite priorité étant utilisée pour indiquer l'ordre dans lequel le processeur alloue ses ressources au processus.

4. Le procédé selon la revendication 3, dans lequel la diminution de la priorité de planification du premier processus comprend :
augmenter la valeur de la priorité de planification du premier processus.

5. Le procédé selon la revendication 1, dans lequel la r é duction du taux d'utilisation du processeur par le premier processus comprend :
réduire le seuil du taux d'utilisation du processeur pour le premier processus.

6. Le procédé selon l'une quelconque des revendications 1 à 5, **caractérisé en ce que** l'ex é cution de la premi è re application n'est pas perçue par l'utilisateur, comprenant :
la première application n'entre pas et ne sort pas de son ; et la première application ne reçoit ni ne transmet de données via la communication mobile ou la communication sans fil.

7. Le procédé selon l'une quelconque des revendications 1 à 6, **caractérisé en ce que** la première application s'exécute en arrière-plan de l'appareil électronique, comprenant :
la première application ne possède pas d'interface d'interaction homme-machine.

8. Le procédé selon l'une quelconque des revendications 1 à 6, **caractérisé en ce que** la première application s'exécute en arrière-plan de l'appareil électronique, comprenant :
une interface d'interaction homme-machine de la première application cesse d'être affichée sur un écran de l'appareil électronique.

9. Un dispositif électronique, comprenant un processeur et une mémoire, la mé moire étant couplée au processeur, la mémoire étant configurée pour stocker un code de programme informatique, et le code de programme informatique comprenant une instruction informatique, l'instruction informatique, lorsqu'elle est exécutée par le processeur, amène le dispositif électronique à réaliser le procédé selon l'une quelconque des revendications 1 à 8.

10. Un support de stockage lisible par ordinateur, comprenant une instruction informatique, l'instruction informatique, lorsqu'elle est exécutée sur un dispositif é lectronique, amène ledit dispositif à réaliser le procédé selon l'une quelconque des revendications 1 à 8.
